# EUROPEAN PATENT APPLICATION

(11) **EP 4 321 763 A1**
(43) Date of publication of application: **14.02.2024**
(21) Application number: 22190285.1
(22) Date of filing: 12.08.2022
(51) Int. Cl.: F16B 25/00

(54) **CEMENT-WOOD COMBINING SCREW**

(71) Applicant: Bi-Mirth Corp., Kaohsiung County (TW)
(72) Inventor: SHIH, Yi-Chieh, Kaohsiung City (TW)
(74) Representative: 2K Patentanwälte Blasberg Kewitz & Reichel

(57) **Abstract**

A cement-wood combining screw (100), including a screw head (10), a screw stem (20), a first screw thread (30), a plurality of first anchoring screw threads (40), and a plurality of second anchoring screw threads (50). The screw head (10) extends to form the screw stem (20), and the screw stem (20) includes an anchoring section (21), a connecting section (22), a first screw thread section (23), and a screw tip section (24). The plurality of first anchoring screw threads (40) and the plurality of second anchoring screw threads (50) are alternately projected from the anchoring section (21). The first screw thread (30) is projected from and formed on the first screw thread section (23) and the screw tip section (24). The first screw thread section (23) is screwed into a wood material (200), a cement (300) covers the cement-wood combining screw (100). The plurality of first anchoring screw threads (40) and the plurality of second anchoring screw threads (50) increase the anchoring force between the cement (300) and the wood material (200), take advantages of bending resistance of the wood material (200) and compression resistance of the cement (300), and provide a composite structure of high rigidity and high strength.

## Description

### FIELD OF THE INVENTION

The invention relates to a screw structure, in particular to a cement-wood combining screw screwed into a wood material to increase an anchoring force with cement covered on the wood material.

### BACKGROUND OF THE INVENTION

Wood is an environment-friendly building material, and the sawdust of wood can form a laminated wood board through a lamination process, which is also a renewable resource. Through planned felling, planting, and growth, trees absorb a large amount of carbon dioxide in their growth, thereby preventing greenhouse effect, and facilitating recycle of trees.

However, in terms of mechanical properties, engineered wood such as plywood are less homogeneous and are less in strength variation than conventional materials such as timber or square lumber; in contrast, cement and concrete, as a building material, has a low price, better mechanical properties, and superior fire resistance. Therefore, concrete is widely used in architecture.

Although the concept of using wood combined with concrete has been proposed and a composite board of wood and concrete has been employed in bridge engineering, the composite board of wood and concrete is still structurally defective due to shear stress and connection between the wood and the concrete. Therefore, the improvement based on the conventional technique is necessary.

### SUMMARY OF THE INVENTION

It is an object according to the invention to provide a cement-wood combining screw screwed into a wood material in combination with cement covering the wood material to increase the anchoring force between the cement and the wood material.

To achieve the above object, the invention provides a cement-wood combining screw including a screw head, a screw stem, a first screw thread, a plurality of first anchoring screw threads, and a plurality of second anchoring screw threads, wherein the screw head includes a top and a neck, the neck extends from the top and tapers away from the top. The screw stem extends from the neck of the screw head, the screw stem includes an anchoring section connected to the neck, a connecting section, a first screw thread section, and a screw tip section, the anchoring section has a first stem diameter, the connecting section has a second stem diameter, the first screw thread section has a third stem diameter, and the screw tip section tapers away from the first screw thread section; the first screw thread is spirally protruded from outer circumferential surfaces of the connecting section, the first screw thread section, and the screw tip section of the screw stem; the plurality of first anchoring screw threads are projected from an outer peripheral surface of the anchoring section of the screw stem, and each of the plurality of first anchoring screw thread has a first inclined surface and a first circumferential surface adjoined to the first inclined surface, wherein a first anchoring screw thread angle is defined between the first inclined surface and the first circumferential surface; the plurality of second anchoring screw threads are projected from the outer peripheral surface of the anchoring section of the screw stem, and each of the plurality of second anchoring screw threads has a second inclined surface and a second circumferential surface adjoined to the second inclined surface, wherein a second anchoring screw thread angle is defined between the second inclined surface and the second circumferential surface, and wherein the plurality of first anchoring screw threads and the plurality of second anchoring screw threads are alternately arranged on the anchoring section.

Further, the first circumferential surface of each of the plurality of first anchoring screw threads faces the adjacent second circumferential surface of the second anchoring screw thread.

Further, the first inclined surface of each of the plurality of first anchoring screw threads faces the adjacent inclined surface of the second anchoring screw thread.

Further, the second stem diameter of the connecting section is greater than the third stem diameter of the first screw thread section, and the third stem diameter of the first screw thread section is greater than the first stem diameter of the anchoring section.

Further, the first screw thread includes a second screw thread, the second screw thread covers at least a part of the first screw thread section and the screw tip section, and the second screw thread includes a plurality of drill teeth.

Further, a degree of the first anchoring screw thread angle is different from a degree of the second anchoring screw thread angle.

Further, a degree of the first anchoring screw thread angle is equal to a degree of the second anchoring screw thread angle.

Further, a third anchoring screw thread is provided between each of the plurality of first anchoring screw threads and the adjacent second anchoring screw thread.

### BRIEF DESCRIPTION OF THE DRAWINGS

Fig.1 is a schematic diagram of a cement-wood combining screw according to the invention.
Fig.2A is a side view of the cement-wood combining screw according to the invention.
Fig.2B is an enlarged partial view of an encircled portion 2B in Fig. 2A.
Fig.3A is a cross-section diagram of the cement-wood combining screw according to the invention.
Fig.3B is an enlarged partial view of an encircled portion 3B in Fig. 3A.
Fig.3C is an enlarged partial view of an encircled portion 3C in Fig. 3A.
Fig.3D is an enlarged partial view of an encircled portion 3D in Fig. 3A.
Fig.4 is an enlarged partial view of an encircled portion 3B in Fig. 3A showing a first anchoring screw thread angle different from a second anchoring screw thread angle.
Fig.5 is an enlarged partial view of another embodiment according to the encircled portion 3B in Fig. 3A.
Fig.6 is a schematic diagram of the cement-wood combining screw according to the invention provided with a third anchoring screw thread.
Fig.7 is a side view of the cement-wood combining screw according to the invention provided with the third anchoring screw thread.
Fig.8 is a schematic diagram of the cement-wood combining screw of the invention in use when it is screwed into a wood material and covered with cement.
Fig.9 is a schematic diagram of the cement-wood combining screw of the invention in use when it is screwed into the wood material, combined with a steel reinforcement, and then covered with the cement.

### DETAILED DESCRIPTION OF THE PREFERRED EMBODIMENTS

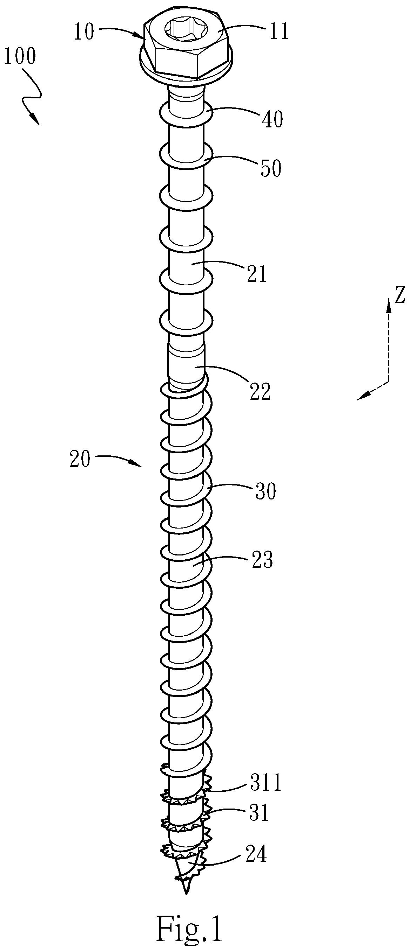

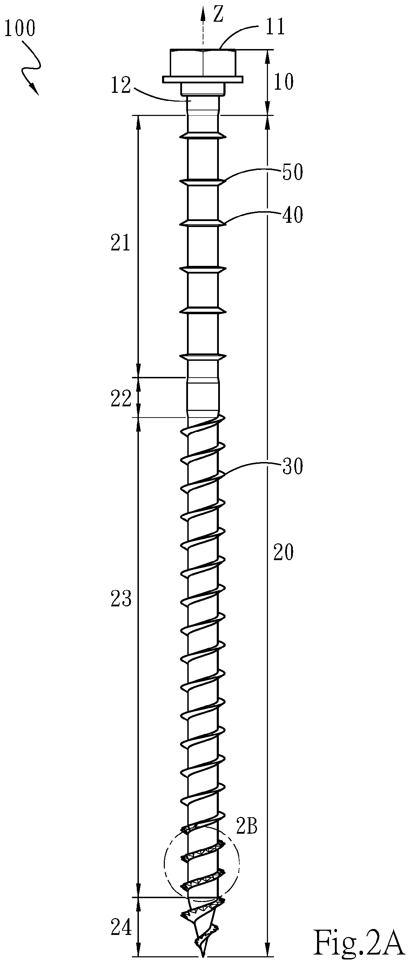

A cement-wood combining screw 100 (A cement-timber combining screw 100) provided by the invention is shown in Figs 1, 2A-B, 3A-D, 4, 5, 6, 7, 8, and 9 for reference. One end of each of a plurality of the cement-wood combining screw 100 is screwed into a wood material 200, and then cement 300 is covered and joined on the wood material 200 and also completely covered on the plurality of the cement-wood combining screw 100 screwed into the wood material 200. The cement-wood combining screw 100 includes a screw head 10, a screw stem 20, a first screw thread 30, a plurality of first anchoring screw threads 40, and a plurality of second anchoring screw threads 50.

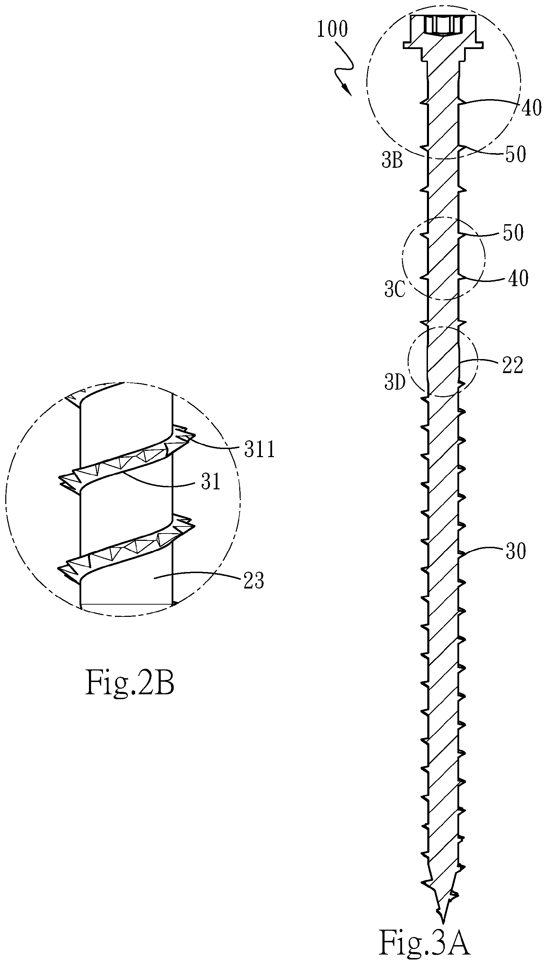

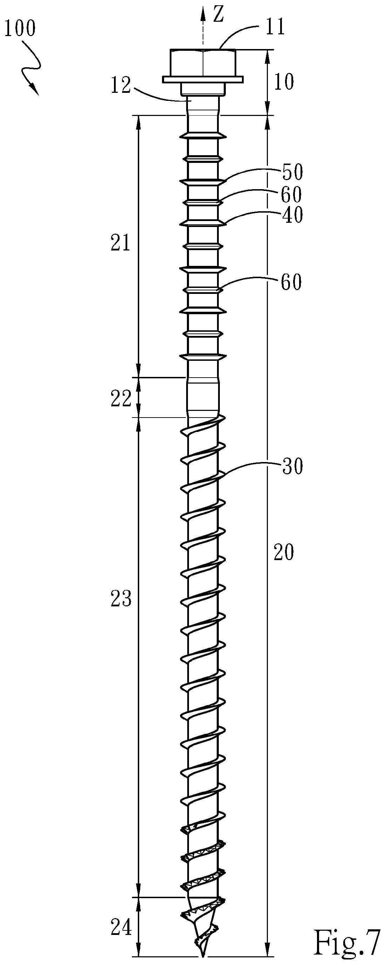

With reference to Figs. 3A and 7, the screw head 10 includes a top 11 and a neck 12, and the neck 12 extends from the top 11 and tapers away from the top 11.

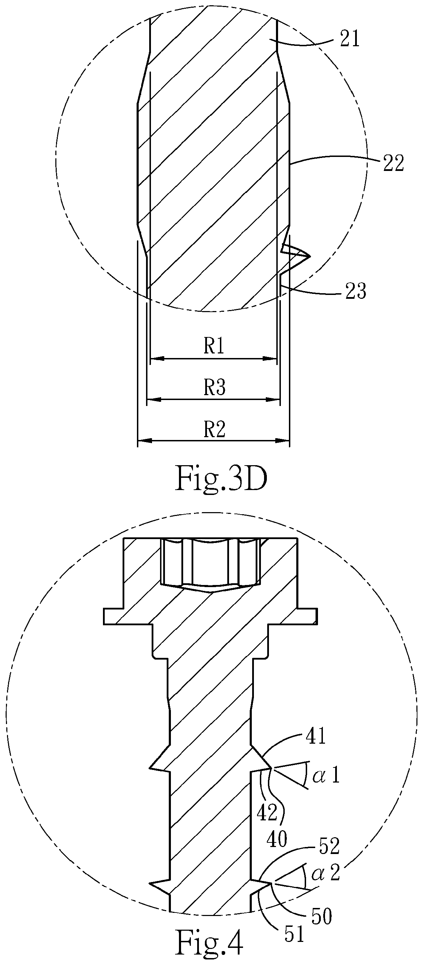

The screw stem 20 extends from the neck 12 of the screw head 10, and the screw stem 20 includes an anchoring section 21 connected to the neck 12, a connecting section 22, a first screw thread section 23, and a screw tip section 24. With reference to Fig. 3D, the anchoring section 21 has a first stem diameter R1, the connecting section 22 has a second stem diameter R2, the first screw thread section 23 has a third stem diameter R3, and the screw tip section 24 extends from the first screw thread section 23 and tapers away from the first screw thread section 23 in an axial direction Z of the screw stem 20.

The first screw thread 30 is spirally protruded from outer peripheral surfaces of the connecting section 22, the first screw thread section 23, and the screw tip section 24 of the screw stem 20, wherein the first screw thread 30 includes a second screw thread 31, the second screw thread 31 covers at least a part of the first screw thread section 23 adjoining the screw tip section 24, and the second screw thread 31 includes a plurality of drill teeth 311. In one embodiment, the second screw thread 31 extends on the first screw thread 30 from the first screw thread section 23 to the screw tip section 24.

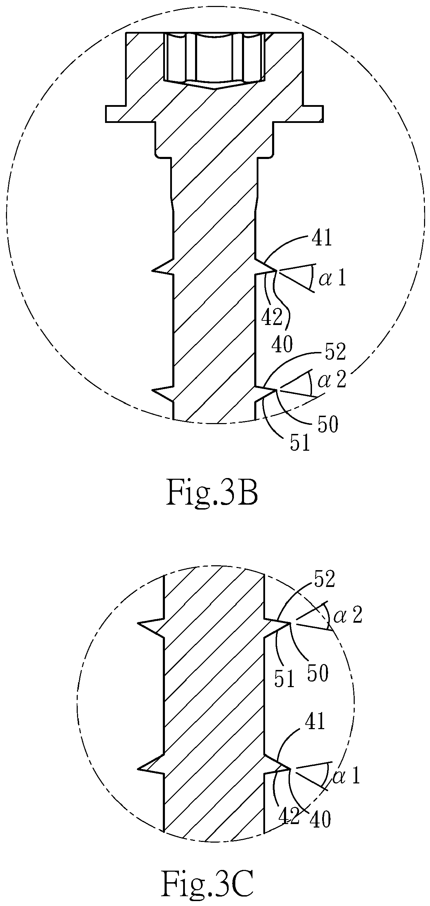

The plurality of first anchoring screw threads 40 are projected from an outer peripheral surface of the anchoring section 21 of the screw stem 20; with reference to Figs. 3B and 3C, each of the plurality of first anchoring screw threads 40 has a first inclined surface 41 and a first circumferential surface 42 adjoined to the first inclined surface 41, wherein a first anchoring screw thread angle α1 is defined between the first inclined surface 41 and the first circumferential surface 42.

The plurality of second anchoring screw threads 50 are projected from the outer peripheral surface of the anchoring section 21 of the cement-wood combining screw 100, and each of the plurality of second anchoring screw threads 50 has a second inclined surface 51 and a second circumferential surface 52 adjoined to the second inclined surface 51, wherein a second anchoring screw thread angle α2 is defined between the second inclined surface 51 and the second circumferential surface 52.

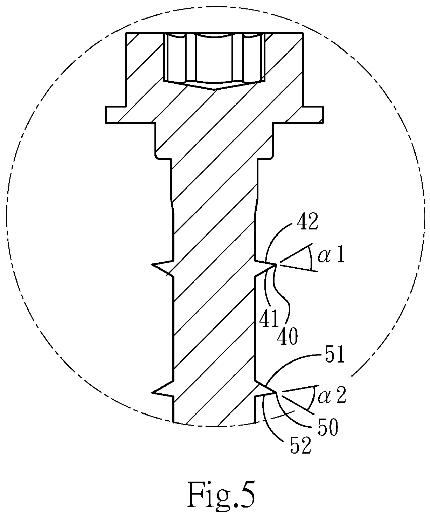

The plurality of first anchoring screw threads 40 and the plurality of second anchoring screw threads 50 are alternately arranged on the anchoring section 21. As shown in Figs. 3A, 3B, and 3C, the first circumferential surface 42 of each of the plurality of first anchoring screw threads 40 faces the adjacent second circumferential surface 52 of the second anchoring screw thread 50, the first inclined surface 41 of each of the plurality of first anchoring screw threads 40 faces the adjacent second inclined surface 51 of the second anchoring screw thread 50, and a degree of the first anchoring screw thread angle α1 is equal to a degree of the second anchoring screw thread angle α2. In one embodiment, with reference to Fig. 4, a degree of the first anchoring screw thread angle α1 is different from a degree of the second anchoring screw thread angle α2. With reference to Fig. 3B, the plurality of first anchoring screw threads 40 and the plurality of second anchoring screw threads 50 of the anchoring section 21 are sequenced in an order that the plurality of first anchoring screw threads 40 adjoins the neck 12 first, therefore, when the plurality of first anchoring screw threads 40 and the plurality of second anchoring screw threads 50 are arranged alternately, the first circumferential surface 42 faces the adjacent second circumferential surface 52. In one embodiment, with reference to Fig. 5, the anchoring section 21 is configured that the first inclined surface 41 of the plurality of first anchoring screw thread 40 faces the adjacent second inclined surface 51 of the plurality of second anchoring screw thread 50, and the plurality of first anchoring screw threads 40 and the plurality of second anchoring screw threads 50 of the anchoring section 21 are arranged alternately, thereby increasing an anchoring force between the plurality of first and second anchoring screw threads 40 and 50 on the anchoring section 21 and the cement 300. Moreover, the plurality of first anchoring screw threads 40 and the plurality of second anchoring screw threads 50 are sequenced in an order that one of the plurality of second anchoring screw threads 50 adjoins the neck 12 first, and the plurality of first and second anchoring screw threads 40 and 50 are arranged alternately and are projected from the anchoring section 21.

Herein, with reference to Fig. 3A and Fig. 3D, the second stem diameter R2 of the connecting section 22 is greater than the third stem diameter R3 of the first screw thread section 23, and the third stem diameter R3 of the first screw thread section 23 is greater than the first stem diameter R1 of the anchoring section 21.

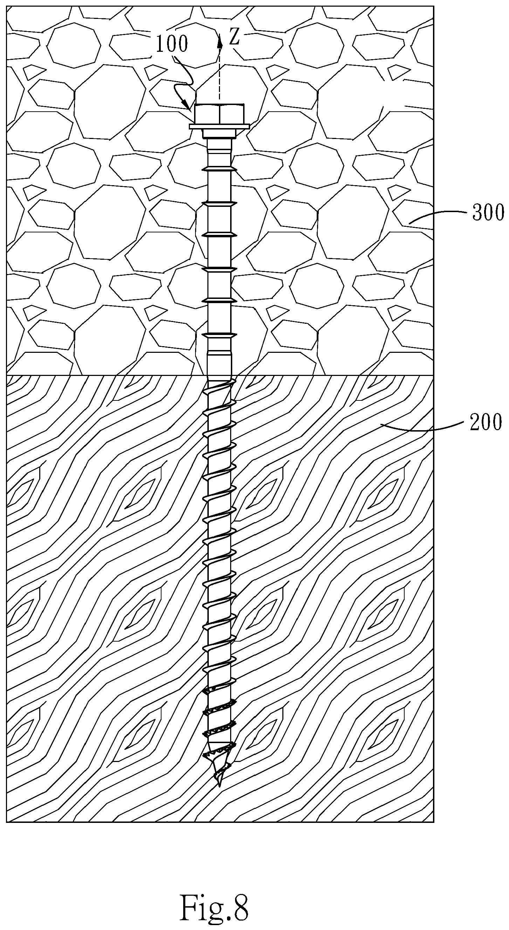

Furthermore, with reference to Fig. 8, the cement-wood combining screw 100 first screws the first screw thread section 23 and the screw tip section 24 of the screw stem 20 into the wood material 200 through the first screw thread 30 of the first screw thread section 23, the second screw thread 31 of the first screw thread section 23, and the second screw thread 31 of the screw tip section 24, and a maximum depth at which the cement-wood combining screw 100 is screwed into the wood material 200 is determined according to the position of the connecting section 22. After a plurality of the cement-wood combining screw 100 are screwed into the wood material 200, the cement 300 is covered on the wood material 200, and the cement 300 completely covers the screw head 10, the anchoring section 21 and the connecting section 22 of the screw stem 20 of each of the plurality of the cement-wood combining screw 100; after the cement 300 is hardened, the plurality of first anchoring screw threads 40 and the plurality of second anchoring screw threads 50 of the anchoring section 21 increase an anchoring force between the wood material 200 and the cement 300 to solve the problem of the shear stress between the connection of the cement 300 and the wood material 200. With referring to Figs. 3A, 3B, 3C, 3D, and 4, the plurality of first anchoring screw threads 40 and the plurality of second anchoring screw threads 50 are configured that the first anchoring screw thread angle α1 is equal to a degree of the second anchoring screw thread angle α2, or the first anchoring screw thread angle α1 is different from a degree of the second anchoring screw thread angle α2. Moreover, the first circumferential surface 42 and the first inclined surface 41 of each of the plurality of first anchoring screw threads 40 faces the adjacent second circumferential surface 52 and the adjacent second inclined surface 51 of the plurality of second anchoring screw threads 50, respectively. Accordingly, the alternately arrangement increase the ability of the plurality of the cement-wood combining screw 100 to anchor the cement 300 onto a surface of the wood material 200. In one embodiment, the first anchoring screw thread angle α1 and the second anchoring screw thread angle α2 are approximately in a range between 10 and 30 degrees, with preferred angles of 20 degrees.

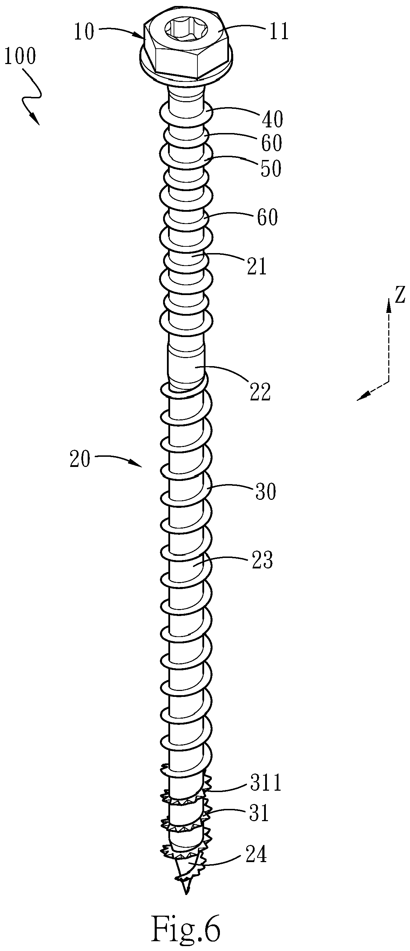

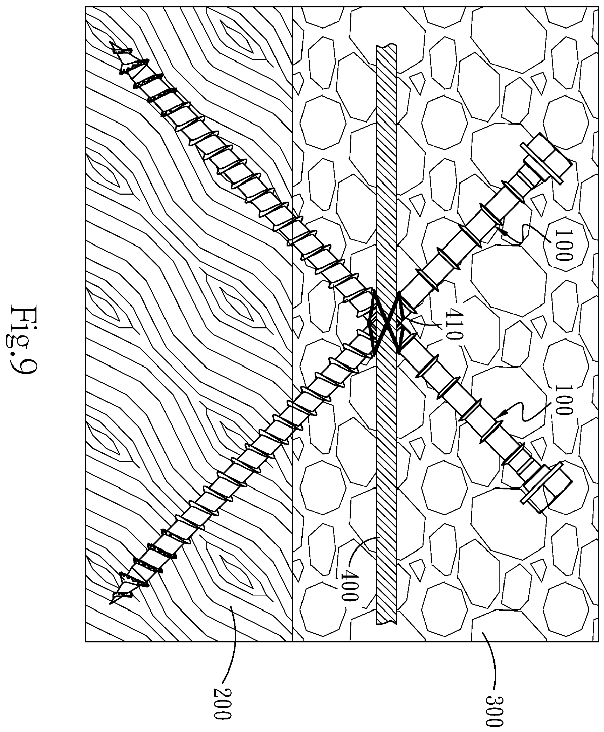

Furthermore, with reference to Figs. 6 and 7, a third anchoring screw thread 60 is provided between each two adjacent first and second anchoring screw threads 40 and 50 of the anchoring section 21. An outer diameter of the third anchoring screw thread 60 is smaller than an outer diameter of the first anchoring screw thread 40 and is smaller than an outer diameter of the second anchoring screw thread 50, the third anchoring screw thread 60 is designed as a symmetrical structure, and each of the plurality of first anchoring screw threads 40 and the plurality of second anchoring screw threads 50 is designed as an asymmetrical structure. The third anchoring screw thread 60 further increases the effect of the anchoring section 21 to anchor the cement 300 onto the wood material 200. Furthermore, with reference to Fig. 9, the plurality of the cement-wood combining screw 100 are screwed into the wood material 200 and arranged in a cross-shape Then an iron wire 410 binds a reinforcing steel 400 to the cement-wood combining screw 100; after this, the cement 300 is covered on the plurality of the cement-wood combining screw 100, the reinforcing steel 400 and the iron wire 410; after the cement 300 is hardened, the cement 300 is anchored on the wood material 200 through the plurality of first anchoring screw threads 40, the plurality of second anchoring screw threads 50, and the third anchoring screw thread 60.

In view of the above, the cement-wood combining screw 100 is screwed into the wood material 200 through the first screw thread 30 and the second screw thread 31. The connecting section 22 abuts the wood material 200 and fixes the first screw thread section 23 and the screw tip section 24 to the wood material 200, and the cement 300 is covered on the screw head 10, the anchoring section 21, and the connecting section 22. The plurality of first anchoring screw threads 40 and the plurality of second anchoring screw threads 50 are alternately arranged on the anchoring section 21, to increase the anchoring force between the cement 300 and the wood material 200, take advantage of bending resistance of the wood material 200 and compression resistance of the cement 300, and provide a composite structure of high rigidity and high strength.

## Claims

1. A cement-wood combining screw (100), configured to be screwed into a wood material (200) and to join cement (300) covering the wood material (200), the cement-wood combining screw (100)comprising:
a screw head (10), comprising a top (11) and a neck (12), the neck (12) extending from the top (11) and tapers away from the top (11);
a screw stem (20), extending from the neck (12) of the screw head (10), and the screw stem (20) comprising an anchoring section (21) connected to the neck (12), a connecting section (22), a first screw thread section (23), and a screw tip section (24), wherein the anchoring section (21) has a first stem diameter (R1), the connecting section (22) has a second stem diameter (R2), the first screw thread section (23) has a third stem diameter (R3), and the screw tip section (24) extends from the first screw thread section (23) and tapers away from the first screw thread section (23);
a first screw thread (30), spirally protruded from outer peripheral surfaces of the connecting section (22), the first screw thread section (23), and the screw tip section (24) of the screw stem (20);
a plurality of first anchoring screw threads (40), protruded from an outer peripheral surface of the anchoring section (21) of the screw stem (20), and each of the plurality of first anchoring screw threads (40) has a first inclined surface (41) and a first circumferential surface (42) adjoined to the first inclined surface (41), wherein a first anchoring screw thread angle (α1) is defined between the first inclined surface (41) and the first circumferential surface (42); and
a plurality of second anchoring screw threads (50), protruded from the outer peripheral surface of the anchoring section (21) of the screw stem (20), and each of the plurality of second anchoring screw threads (50) has a second inclined surface (51) and a second circumferential surface (52) adjoined to the second inclined surface (51), wherein a second anchoring screw thread angle (α2) is defined between the second inclined surface (51) and the second circumferential surface (52);
wherein the plurality of first anchoring screw threads (40) and the plurality of second anchoring screw threads (50) are arranged alternately on the anchoring section (21).

2. The cement-wood combining screw (100) according to claim 1, wherein the first circumferential surface (42) of each of the plurality of first anchoring screw threads (40) faces the adjacent second circumferential surface (52) of the second anchoring screw thread (50).

3. The cement-wood combining screw (100) according to claim 1, wherein the first inclined surface (41) of each of the plurality of first anchoring screw threads (40) faces the adjacent second inclined surface (51) of the second anchoring screw thread (50).

4. The cement-wood combining screw (100) according to claim 1, wherein the second stem diameter (R2) of the connecting section (22) is greater than the third stem diameter (R3) of the first screw thread section (23), and the third stem diameter (R3) of the first screw thread section (23) is greater than the first stem diameter (R1) of the anchoring section (21).

5. The cement-wood combining screw (100) according to claim 1, wherein the first screw thread (30) comprises a second screw thread (31), the second screw thread (31) covers at least a part of the first screw thread section (23) and the screw tip section (24), and the second screw thread (31) comprises a plurality of drill teeth (311).

6. The cement-wood combining screw (100) according to claim 1, wherein a degree of the first anchoring screw thread angle (α1) is different from a degree of the second anchoring screw thread angle (α2).

7. The cement-wood combining screw (100) according to claim 1, wherein a degree of the first anchoring screw thread angle (α1) is equal to a degree of the second anchoring screw thread angle (α2).

8. The cement-wood combining screw (100) according to claim 1, wherein a third anchoring screw thread (60) is provided between each of the plurality of first anchoring screw threads (40) and the adjacent second anchoring screw thread (50).
